# EUROPÄISCHE PATENTSCHRIFT

(11) **EP 3 497 759 B1**
(45) Veröffentlichungstag und Bekanntmachung des Hinweises auf die Patenterteilung: **02.09.2020**
(21) Anmeldenummer: 17735528.6
(22) Anmeldetag: 05.07.2017
(51) Int. Cl.: H02B 1/28, H02B 1/36

(54) **SCHUTZABDECKUNG**
PROTECTIVE COVER
COUVERCLE DE PROTECTION

(30) Priorität: 10.08.2016 DE 102016114802
(43) Veröffentlichungstag der Anmeldung: 19.06.2019
(73) Patentinhaber: Eaton Intelligent Power Limited, Dublin 4 (IE)
(72) Erfinder: BONA, Gerhard, 53177 Bonn (DE); SCHMIDT, Rainer, 53757 Sankt Augustin (DE); RITSCHEL, Norbert, 40627 Düsseldorf (DE)
(74) Vertreter: Eaton IP Group EMEA
(86) Internationale Anmeldenummer: PCT/EP2017/066800
(87) Internationale Veröffentlichungsnummer: WO 2018/028890

(56) Entgegenhaltungen:
- EP-A1- 2 151 029

## Beschreibung

Die vorliegende Erfindung betrifft eine Schutzabdeckung für ein Einschub-Bedienelement in einer Schaltanlage sowie eine Schaltanlage, umfassend ein Einschub-Bedienelement mit einer derartigen Schutzabdeckung.

Schaltanlagen dienen der Verteilung elektrischer Energie sowie der Schaltung, Steuerung und Überwachung von ankommenden und abgehenden Leitungen, insbesondere bei Großverbrauchern. Hierzu können unterschiedliche Schaltgeräte in ein Schaltanlagengehäuse integriert und dort an Sammelschienen angeschlossen werden.

Es ist bereits bekannt, Schaltanlagen in Einschubtechnik zu bauen. Hierbei sind zumindest einzelne Felder der Schaltanlage mit einschiebbaren Modulen bestückbar. Im Falle eines Defekts kann so lediglich das betroffene Modul ausgetauscht werden, ohne dass die komplette Schaltanlage spannungsfrei geschaltet werden müsste. Dies ist insbesondere für industrielle Anwendungen von Bedeutung, da große Anlagen, welche über eine Schaltanlage betrieben werden, im Falle eines Defekts einer einzelnen Baugruppe nicht komplett abgeschaltet und wieder neu gestartet werden müssen. Einschubsysteme erlauben den Austausch der defekten Baugruppe auch unter Spannung. So können Störfälle ohne Betriebsunterbrechung schnell behoben werden.

Für viele Anwendungen ist die zuverlässige Funktion einer Schaltanlage auch unter ungünstigen Umgebungsbedingungen sicherzustellen. Insbesondere ist das Eindringen von Feuchtigkeit und/oder Staub in die Schaltanlage zu verhindern. Bezüglich ihrer Eignung für verschiedene Umgebungsbedingungen wird den Schaltanlagen eine IP-Schutzart zugeordnet, welche den Schutzgrad des Gehäuses gegen das Eindringen von Fremdkörpern und Wasser definiert. An das Kürzel IP werden dazu zwei Kennziffern angehängt, wobei die erste Kennziffer den Schutz des Gehäuses gegenüber Fremdkörpern und die zweite Kennziffer den Schutz des Gehäuses gegenüber Wasser anzeigt.

Für Schaltanlagen in Einschubtechnik wird häufig nur die Schutzart IP30 erreicht, da nicht alle modularen Komponenten gegen das Eindringen von Staub und Feuchtigkeit geschützt sind. Selbst wenn große Teile der Schaltanlage eine hohe Schutzart, beispielsweise IP54, besitzen, so unterliegt doch die gesamte Schaltanlage einer Beschränkung bis IP30, sobald ein einzelnes Modul dieser Beschränkung unterliegt.

So wird beispielsweise in zahlreichen aktuellen Schaltanlagen ein Modul zum elektrischen Energieabgriff von Stromschienen der Firma IDS-Technology GmbH verbaut, welches in der DE 10 2008 046 881 A1 offenbart ist. Dieses Modul umfasst eine Verriegelungseinheit und eine Einheit mit mehreren Kontaktschaltern, wobei die Kontaktschalter mittels der Verriegelungseinheit betätigbar sind und wobei die Verriegelungseinheit und die Kontaktschalter in einem Gehäuse angeordnet sind. Dieses Modul weist im Bereich seiner Bedienfront Öffnungen auf, welche nicht gegen das Eindringen von Wasser und Staub geschützt sind und lässt daher maximal die Schutzart IP30 zu. Das genannte Modul ist ein Beispiel für ein Einschub-Bedienelement.

Es ist bereits bekannt, größere Bereiche einer Schaltanlage durch zusätzliche Türen oder Abdeckungen abzudichten, um so eine höhere Schutzart zu erreichen. So offenbart die DE 10 2004 049 708 B4 einen einteiligen Trägerrahmen für elektrische Einbaumodule, welcher eine integrierte Abdeckung für die Einschuböffnung aufweist. Die Abdeckung deckt dabei eine Einschuböffnung ab, in welche eine größere Anzahl von Einbaumodulen einschiebbar ist. Die Abdeckung wird in eine um die Einschuböffnung umlaufende Nut eingesteckt. Eine individuelle Abdeckung eines einzelnen Einschubmoduls ist hiermit nicht möglich.

Die EP2 151 029 B1 und DE10 2007 005 673 A1 offenbaren ferner Schutzabdeckungen für Schaltgeräte.

Die Aufgabe der vorliegenden Erfindung liegt darin, eine Schutzabdeckung für ein einzelnes Einschub-Bedienelement in einer Schaltanlage bereitzustellen, wodurch auf einfache Weise ein verbesserter Schutz gegenüber Fremdkörpern und Wasser sowie gleichzeitig ein Schutz gegenüber Fehlbedienung erreichbar ist. Die Aufgabe der Erfindung liegt darüber hinaus darin, eine Schaltanlage mit einem verbesserten Schutz gegenüber Fremdkörpern und Wasser sowie Fehlbedienung bereitzustellen.

Diese Aufgabe wird gelöst durch eine Schutzabdeckung mit den Merkmalen des Patentanspruchs 1 sowie durch eine Schaltanlage mit den Merkmalen des Patentanspruchs 10.

Weiterbildungen und Ausgestaltungen der Erfindung sind Gegenstand der Unteransprüche.

Gemäß Patentanspruch 1 besteht die Erfindung in einer Schutzabdeckung für ein Einschub-Bedienelement in einer Schaltanlage, umfassend ein Basisteil mit einer Vorderseite, einer Rückseite und einer umlaufenden Kante, wobei auf der Rückseite des Basisteils Ausprägungen ausgebildet sind, welche geeignet sind, in korrespondierende Öffnungen in einer Bedienfront des Einschub-Bedienelements einzugreifen und diese zu verschließen, wobei darüber hinaus auf der Rückseite des Basisteils angrenzend an die Kante ein erstes umlaufendes Dichtelement vorgesehen ist, wobei weiterhin eine von der Rückseite zur Vorderseite durch das Basisteil hindurchgehende Öffnung für den Durchgriff eines Betätigungselements des Einschub-Bedienelements vorgesehen ist, wobei die Öffnung (19) so bemessen ist, dass eine Betätigung des Betätigungselements (11) bei aufgesetzter Schutzabdeckung (12) nicht möglich ist.

Mit anderen Worten sieht die Erfindung eine Schutzabdeckung für ein einzelnes, individuelles Einschub-Bedienelement innerhalb einer größeren Schaltanlagenanordnung vor, die ein Basisteil umfasst, welches in die abzudichtenden Öffnungen in der Bedienfront des Einschub-Bedienelements eingreift und über ein erstes an dem Basisteil vorgesehenes Dichtelement eine Abdichtung dieser Öffnungen bewirkt.

Insbesondere kann so auf einfache Weise eine Abdichtung gemäß Schutzart IP54 für eine Schaltanlage erreicht werden, die bereits in großen Teilen die Anforderungen an die Schutzart IP54 erfüllt, bei der jedoch einzelne Module als Einschübe einer geringeren Schutzart unterliegen und daher gesondert abgedichtet werden müssen. Insbesondere eignet sich die erfindungsgemäße Schutzabdeckung zur Abdichtung der oben bereits genannten Module der Firma IDS-Technology GmbH, die als Einschub-Bedienelemente in einer Schaltanlage Verwendung finden können. Die individuelle Anpassung an das jeweilige abzudichtende Modul macht größere Modifikationen an der gesamten Anlage, wie beispielsweise das Montieren von Dichtungstüren oder -klappen, überflüssig. Die erfindungsgemäße Schutzabdeckung kann auf einfachste Weise in eine bestehende Schaltanlage integriert werden und bewirkt mit einfachsten Mitteln eine Verbesserung der Schutzart einer derartigen Schaltanlage.

Unter "Schutzabdeckung für ein Einschub-Bedienelement" ist im Sinne der Erfindung sowohl zu verstehen, dass die Schutzabdeckung unmittelbar auf die Bedienfront eines Bedienelements aufgebracht werden kann, als auch, dass die Schutzabdeckung auf einen Gehäuseabschnitt, beispielsweise eines Schaltschrankes, aufgesetzt werden kann, der seinerseits Öffnungen aufweist, durch die ein dahinter positioniertes Einschub-Bedienelement bedienbar bzw. ablesbar ist. So kann beispielsweise ein Bedienelement als Einschubmodul ein einer größeren Schaltschrankanordnung Verwendung finden und hinter einer Gehäusewand des Schaltschrankes angeordnet sein, wobei die Gehäusewand entsprechende Öffnungen als Zugangsöffnungen zu dem Einschub-Bedienelement aufweist. Die erfindungsgemäße Schutzabdeckung kann hier auf die Gehäusewand aufgesetzt werden, um die Öffnungen in der Gehäusewand abzudichten. Im Folgenden wird unter der Bedienfront eines Einschub-Bedienelements daher sowohl die Bedienfront eines Einschub-Bedienelements selber als auch der Abschnitt einer Gehäusewand, hinter dem ein Einschub-Bedienelement positioniert ist und der entsprechende Zugangsöffnungen aufweist, verstanden.

Über die an dem Basisteil ausgebildeten Ausprägungen ist die Schutzabdeckung besonders einfach zu positionieren, da die Ausprägungen in die korrespondierenden Öffnungen in der Bedienfront des Einschub-Bedienelements eingreifen. Unter korrespondierenden Öffnungen ist dabei zu verstehen, dass die Ausprägungen ohne Kraftaufwand in die Öffnungen einführbar sind, dass aber zugleich nur ein geringes Spiel zwischen Ausprägungen und Öffnungsbegrenzungen besteht. Hierdurch wird eine hohe Positionsgenauigkeit erreicht und ein Verrutschen oder Verdrehen der Schutzabdeckung kann verhindert werden.

Bei den Öffnungen in der Bedienfront des Einschub-Bedienelements kann es sich beispielsweise um Zugangsöffnungen zu Betätigungseinrichtungen handeln, über welche ein bestimmter Betriebszustand des Einschub-Bedienelements einstellbar ist. Es kann sich auch um Öffnungen handeln, in welchen eine Anzeigeeinheit zur Anzeige eines bestimmten Betriebsszustands des Einschub-Bedienelements angeordnet ist. Ebenso kann es sich um Öffnungen handeln, innerhalb derer Betätigungselemente des Einschub-Bedienelements bewegbar sind.

Es ist erfindungsgemäß vorgesehen, dass in Einsatzlage der Schutzabdeckung ein Betätigungselement des Einschub-Bedienelements durch die durch das Basisteil hindurchgehende Öffnung hindurchgreift. Über dieses hindurchgreifende Betätigungselement ist die Schutzabdeckung an der Bedienfront des Einschub-Bedienelements fixierbar, indem ein Befestigungsmittel, beispielsweise eine Mutter, auf das durch die Öffnung hindurchgreifende Betätigungselement aufschraubbar ist. Das Betätigungselement ist zu diesem Zweck zumindest abschnittsweise mit einem Gewinde versehen.

Bei einer Ausführung der Erfindung ist die Öffnung auf der Vorderseite des Basisteils von einem zweiten Dichtelement umgeben. Durch Aufschrauben einer Mutter auf das Betätigungselement und festes Anziehen dieser Mutter wird die Schutzabdeckung gegen die Bedienfront des Einschub-Bedienelements gepresst. Auf diese Weise werden die von der Schutzabdeckung abgedeckten Öffnungen in der Bedienfront des Einschub-Bedienelements nach außen abgedichtet, wobei das erste Dichtelement für eine Abdichtung im Bereich der Kante des Basisteils sorgt und das zweite Dichtelement für eine Abdichtung im Bereich der Öffnung, durch welche das Betätigungselement hindurchgreift, sorgt.

Es kann auch vorgesehen sein, dass anstelle eines die Öffnung umgebenden zweiten Dichtelements die Mutter an ihrer dem Basisteil zugewandten Seite mit einem Dichtelement ausgestattet ist, über welches die Abdichtung der Öffnung, durch welche das Betätigungselement hindurchgreift, bewirkt wird.

Gemäß einer weiteren Ausgestaltung der Erfindung ist mindestens ein drittes Dichtelement vorgesehen, welches umlaufend um mindestens eine Ausprägung auf der Rückseite des Basisteils angeordnet ist. Mit anderen Worten können auf der Rückseite des Basisteils zusätzlich zu dem angrenzend an die Kante umlaufenden ersten Dichtelement ein oder mehrere weitere Dichtelemente vorhanden sein. So kann jede einzelne Ausprägung auf der Rückseite des Basisteils von einem individuellen dritten Dichtelement umgeben sein, es können auch lediglich einzelne Ausprägungen von einem dritten Dichtelement umgeben sein oder einzelne Ausprägungen können von mehreren dritten Dichtelementen umgeben sein. Durch dritte Dichtelemente zusätzlich zu dem ersten bzw. dem ersten und zweiten Dichtelement wird eine noch bessere Abdichtungswirkung der Schutzabdeckung erreicht.

Es können erfindungsgemäß Nuten für die Aufnahme der Dichtelemente vorgesehen sein. In diesem Fall kann auf der Rückseite des Basisteils eine an die Kante angrenzende umlaufende erste Nut für die Aufnahme des ersten Dichtelements ausgebildet sein, auf der Vorderseite des Basisteils kann um die Öffnung für den Durchgriff des Betätigungselements herum eine umlaufende zweite Nut zur Aufnahme des zweiten Dichtelements ausgebildet sein und auf der Rückseite des Basisteils können bei vorgesehenen dritten Dichtelementen entsprechende dritte Nuten umlaufend um alle oder einzelne Ausprägungen ausgebildet sein. Grundsätzlich können alle ersten, zweiten und dritten Dichtelemente in Nuten aufgenommen sein oder lediglich einzelne Dichtelemente. Derartige Nuten erleichtern das Positionieren der Dichtelemente und geben selbigen eine festere und beständigere Kontur, da sie nicht seitlich ausbrechen können.

Gemäß einer Ausführung der Erfindung sind die Dichtelemente aus einem Polyurethan-Schaum, insbesondere aus einem zweikomponentigen Polyurethan-Schaum gefertigt. Derartige Schäume sind hochelastisch und weisen eine besonders hohe Dichtigkeit auf.

Es kann vorgesehen sein, dass die Dichtelemente durch Beschäumen unmittelbar am Ort des Dichtungssitzes auf das Basisteil aufgebracht werden und fest mit diesem verbunden sind. Hierzu wird in der Regel eine flüssige oder thixotrope, pastöse Dichtmasse in einer Maschine aufbereitet und über eine Düse in Form einer Raupe entweder in an dem Basisteil ausgebildete Nuten eingebracht oder unmittelbar auf das Basisteil aufgetragen. Durch anschließende Trocknung und/oder Vernetzung erhält man ein weiches Dichtmaterial mit hervorragenden Dichtungseigenschaften. Derartige Dichtelemente, welche auch unter dem Namen FIPFG (formed in place foam gasket) bekannt sind, sind fest mit dem Basisteil verbunden und können nicht von diesem abfallen oder verrutschen. Hierdurch wird eine besonders hohe und zuverlässige Abdichtwirkung erzielt. Da die vernetzte Dichtung von selbst auf dem Basisteil haftet, kann auf ein Verkleben der Dichtelemente verzichtet werden.

Grundsätzlich können alle oder lediglich einzelne Dichtelemente aus einem Polyurethan-Schaum gefertigt sein und durch Beschäumen aufgebracht werden. Insbesondere das zweite Dichtelement, welches auf der Vorderseite des Basisteils zur Abdichtung der Öffnung, durch welche das Betätigungselement hindurchgreift, vorgesehen sein kann, kann auch als vorgefertigter, einlegbarer Dichtungsring ausgebildet sein, während das auf der Rückseite des Basisteils vorgesehene erste Dichtelement vorzugsweise durch Beschäumen aufgebracht wird.

Eine Ausgestaltung der Erfindung sieht vor, dass mindestens eine Griffmulde an dem Basisteil ausgebildet ist. Eine derartige Griffmulde erleichtert insbesondere das Abnehmen des Basisteils von der Bedienfront des Einschub-Bedienelements, da die Schutzkappe sich aufgrund der Klemmwirkung im Bereich der Dichtelemente in gewissem Maße auf der Bedienfront festsaugen kann. Die mindestens eine Griffmulde erlaubt in diesem Fall ein besseres Angreifen an der Schutzabdeckung mit der Hand oder mit einem geeigneten Werkzeug. Die Schutzabdeckung kann zwei Griffmulden aufweisen, beispielsweise an einander gegenüberliegenden Kantenbereichen des Basisteils angeordnet, wodurch ein besonders einfaches Angreifen mit Daumen und Zeigefinger möglich ist.

In einer Ausführung der erfindungsgemäßen Schutzabdeckung ist das Basisteil zumindest bereichsweise aus einem durchscheinenden Material gefertigt. Hierdurch ist es möglich, auch bei aufgesetzter Schutzabdeckung die abgedeckten Bereiche, insbesondere Anzeigeeinheiten, zu sehen und zu kontrollieren. Insbesondere die Anzeige eines Betriebszustands des Einschub-Bedienelements ist auf diese Weise jederzeit ablesbar. Dabei kann lediglich ein Bereich des Basisteils, welcher beispielweise eine Anzeigeeinheit abdeckt, durchsichtig ausgeführt sein, oder aber das komplette Basisteil kann aus einem durchsichtigen Material gefertigt sein.

Das Basisteil wird gemäß einer Ausgestaltung der Erfindung in einem Spritzgussverfahren aus einem Kunststoff gefertigt.

Die Erfindung sieht vor, dass die Öffnung für den Durchgriff eines Betätigungselements des Einschub-Bedienelements so bemessen ist, dass eine Betätigung des Betätigungselements bei aufgesetzter Schutzabdeckung nicht möglich ist. Mit anderen Worten wird durch die aufgesetzte Schutzkappe ein Schaltweg des Betätigungselements derart blockiert, dass eine Betätigung des Betätigungselements verhindert wird. Auf diese Weise schafft die erfindungsgemäße Schutzabdeckung neben dem Schutz gegenüber Fremdkörpern und Wasser auch einen Schutz gegenüber Fehlbedienung des Einschub-Bedienelements. Um das Einschub-Bedienelement mittels des Betätigungselements wieder betätigen zu können, muss zunächst die Schutzabdeckung zumindest soweit gelöst werden, dass der Schaltweg für das Betätigungselement wieder freigegeben ist.

Die Blockierung des Schaltweges kann dabei derart erreicht werden, dass eine Ausprägung auf der Rückseite des Basisteils in die den Schaltweg definierende Öffnung in der Bedienfront des Einschub-Bedienelements eingreift und diese abdeckt, wobei lediglich die von der Rückseite zur Vorderseite durch das Basisteil hindurchgehende Öffnung für den Durchgriff des Betätigungselements des Einschub-Bedienelements verbleibt.

Um den durch die Schutzabdeckung abgedeckten Bereich wieder zugänglich zu machen kann das auf dem Betätigungselement fixierte Befestigungsmittel gelöst und entweder die Schutzabdeckung vollständig von der Bedienfront des Einschub-Bedienelements abgenommen werden oder aber das Befestigungsmittel lediglich soweit gelöst werden, dass die Ausprägungen auf der Rückseite des Basisteils aus den Öffnungen in der Bedienfront herausbewegt werden können, die Schutzabdeckung aber nach wie vor durch das durch die Öffnung in dem Basisteil hindurchgreifende Betätigungselement mit dem Einschub-Bedienelement verbunden bleibt. In diesem Fall kann des Betätigungselement als Schwenkachse fungieren, um welche die Schutzabdeckung nach unten schwenkt. Auf diese Weise werden die Öffnungen in der Bedienfront des Einschub-Bedienelements freigegeben, wobei die Schutzabdeckung gleichzeitig verliersicher an dem Einschub-Bedienelement gelagert wird. Die Öffnung für den Durchgriff des Bedienelements kann dabei zweckmäßigerweise so auf dem Basisteil angeordnet sein, dass die Schwenkbewegung der Schutzabdeckung automatisch einsetzt, wenn das Befestigungsmittel gelöst und die Ausprägungen aus den Öffnungen in der Bedienfront herausbewegt wurden.

Schließlich betrifft die Erfindung auch eine Schaltanlage, umfassend ein Einschub-Bedienelement mit einer Schutzabdeckung nach einem der Ansprüche 1 bis 10, wobei in Einsatzlage der Schutzabdeckung ein Betätigungselement des Einschub-Bedienelements durch die durch das Basisteil der Schutzabdeckung hindurchgehende Öffnung hindurchgreift und die Schutzabdeckung mittels eines auf dem Betätigungselement fixierbaren Befestigungselements abdichtend festklemmbar ist.

Bei dem Befestigungselement kann es sich um eine Mutter, insbesondere um eine Rändelmutter handeln, die auf das zumindest abschnittsweise mit einem Gewinde versehene Betätigungselement aufschraubbar ist. Durch festes Anziehen dieser Mutter wird die Schutzabdeckung fest gegen die Bedienfront des Einschub-Bedienelements gepresst und ist somit zwischen Bedienfront und Mutter fest eingeklemmt. Hierdurch ist eine besonders gute Dichtwirkung erzielbar.

Im Folgenden wird die Erfindung anhand von Ausführungsbeispielen und unter Bezugnahme auf die beigefügten Zeichnungen näher erläutert. Es zeigen:
- Figur 1:: Einen Einschubrahmen mit mehreren Modulen zur Integration in eine Schaltanlagenanordnung mit montierten erfindungsgemäßen Schutzabdeckungen;
- Figur 2:: Ein vergrößerter Ausschnitt aus der Darstellung der Figur 1, wobei die Schutzabdeckungen nur teilweise montiert sind;
- Figur 3:: Perspektivische Aufsicht auf die Vorderseite eines Ausführungsbeispiels einer erfindungsgemäßen Schutzabdeckung;
- Figur 4:: Aufsicht auf die Rückseite der Schutzabdeckung aus Figur 3;
- Figur 5:: Aufsicht auf die Schutzabdeckung aus Figur 4 aus Richtung des Pfeils A in Figur 4;
- Figur 6:: Perspektivische Aufsicht auf die Vorderseite eines weiteren Ausführungsbeispiels einer erfindungsgemäßen Schutzabdeckung;
- Figur 7:: Aufsicht auf die Rückseite der Schutzabdeckung aus Figur 6.

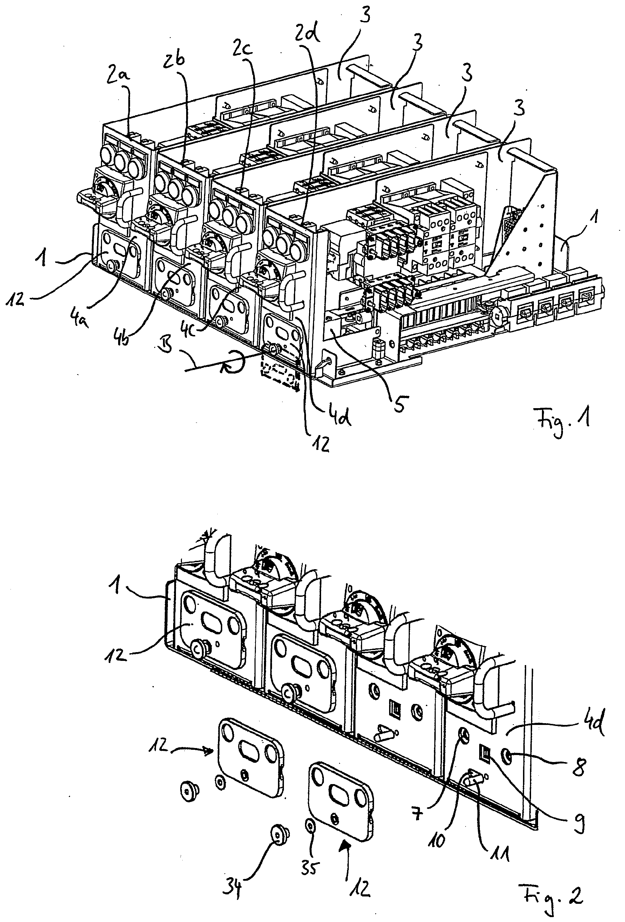

In Figur 1 ist ein Einschubrahmen 1 mit mehreren gleichartigen Modulen 2a, 2b, 2c, 2d dargestellt. Die Module 2a, 2b, 2c, 2d sind auf dem Einschubrahmen 1 befestigt und können mit diesem in eine hier nicht näher dargestellte Schaltanlagenanordnung in Einschubtechnik integriert werden. Jedes Modul 2a, 2b, 2c, 2d umfasst mehrere hier nicht näher erläuterte Komponenten, die jeweils hinter einer einem Benutzer zugewandten Bedienfront 4a, 4b, 4c, 4d und zwischen Trennwänden 3 angeordnet sind.

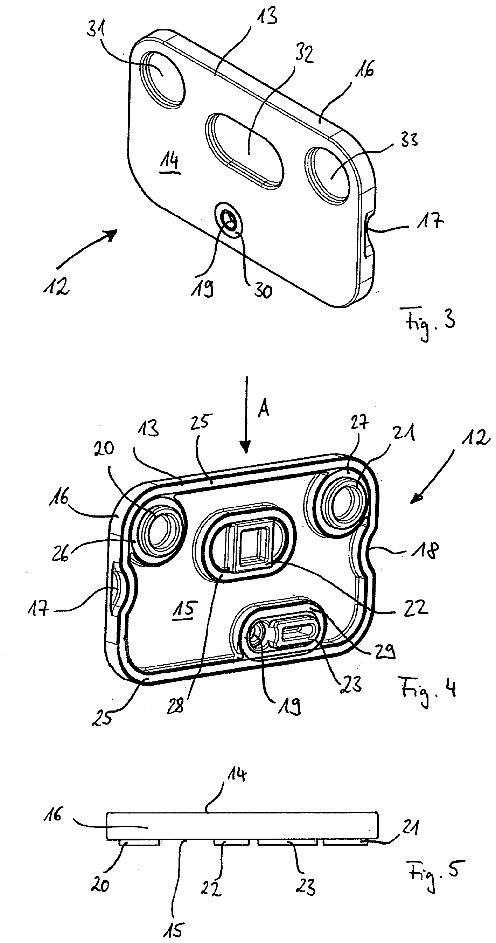

Die weiteren Erläuterungen werden nun exemplarisch anhand des Moduls 2d vorgenommen, treffen aber gleichermaßen auch auf die übrigen Module 2a, 2b und 2c zu. Auf der Bedienfront 4d sind verschiedene Knöpfe und Schalter angeordnet, welche eine Betätigung der hinter der Bedienfront 4d angeordneten Komponenten des Moduls 2d ermöglichen. Unmittelbar hinter der Bedienfront 4d ist ein Einschub-Bedienelement 5 angeordnet. Auch dieses Einschub-Bedienelement 5 ist grundsätzlich von der Bedienfront 4d aus zu betätigen, in der Darstellung der Figur 1 ist der entsprechende Bereich jedoch von einer Schutzabdeckung 12 verdeckt. Die Schutzabdeckung 12 wird später anhand der Figuren 3 bis 5 noch näher erläutert.

Die Figur 2 zeigt einen vergrößerten Ausschnitt aus der Darstellung der Figur 1, wobei hier an den Modulen 2c und 2d die Schutzabdeckungen 12 nicht montiert sind. In dieser Darstellung ist zu erkennen, dass die Bedienfront 4d Öffnungen 7, 8, 9 und 10 aufweist, welche Zugang zu den dahinterliegenden Betätigungs- bzw. Anzeigeelementen des Einschub-Bedienelements 5 bieten. Durch die Öffnung 10 reicht ein stiftförmiges Betätigungselement 11 des Einschub-Bedienelements 5 durch die Bedienfront 4d hindurch. Die Öffnung 10 ist als Langloch ausgebildet, innerhalb dessen das Betätigungselement 11 verschiebbar ist. Durch die Öffnungen 7 und 8 sind Schlüsselaufnahmen in dem Einschub-Bedienelement 5 zugänglich, in welche ein Bedienschlüssel einführbar ist.

In einer Grundstellung des Betätigungselements 11 sind die Schlüsselaufnahmen hinter den Öffnungen 7 und 8 verschlossen, so dass ein Einführen des Bedienschlüssels nicht möglich ist. Das Modul 2d befindet sich in einer Trennstellung. Durch manuelles Verschieben des Betätigungselements 11 innerhalb der Öffnung 10 öffnen sich die Schlüsselaufnahmen hinter den Öffnungen 7 und 8. Durch Einführen des Bedienschlüssels in die hinter der Öffnung 7 liegende Schlüsselaufnahme und Drehen des Bedienschlüssels kann das Modul 2d aus der Trennstellung in eine Teststellung überführt werden. Durch Einführen des Bedienschlüssels in die hinter der Öffnung 8 liegende Schlüsselaufnahme und Drehen des Bedienschlüssels kann das Modul 2d aus der Trennstellung in eine Betriebsstellung überführt werden. Der jeweils aktuelle Betriebszustand des Moduls 2d wird durch eine farbliche Kodierung angezeigt, welche durch die Öffnung 9 ablesbar ist.

Um in einer Schaltanlagenanordnung den Anforderungen an die Schutzart IP54 zu genügen, sind die Öffnungen 7, 8, 9, 10 gegenüber Wasser und Fremdkörpern abzudichten. Hierzu ist die Schutzabdeckung 12 vorgesehen, welche anhand der Figuren 3 bis 5 nun detaillierter erläutert wird.

Die Schutzabdeckung 12 umfasst ein Basisteil 13 mit einer Vorderseite 14 und einer Rückseite 15, wobei in Einsatzlage die Vorderseite 14 einem Benutzer und die Rückseite 15 einer Bedienfront des Einschub-Bedienelements zugewandt ist. Das Basisteil 13 ist im Spritzgussverfahren aus einem durchsichtigen Kunststoff gefertigt. Es weist eine umlaufende Kante 16 auf. Das Basisteil weist eine Länge von etwa 8 cm, eine Breite von etwa 5 cm sowie im Bereich der Kante eine Dicke von etwa 0,5 cm auf und ist an den Ecken abgerundet. Griffmulden 17, 18 erleichtern das Angreifen an dem Basisteil 13.

Eine Öffnung 19 geht von der Rückseite 15 zur Vorderseite 14 durch das Basisteil 13 hindurch für den Durchgriff des Betätigungselements 11 des Einschub-Bedienelements 5. Die Öffnung 19 ist die einzige Öffnung in dem Basisteil 13, die von der Rückseite 15 zur Vorderseite 14 durch das Basisteil 13 hindurchgeht. Bei den Bereichen 31, 32, 33 handelt es sich nicht um durch das Basisteil 13 hindurchgehende Öffnungen. Vielmehr ist in Figur 3 hierdurch lediglich die Lage der im Folgenden erläuterten Ausprägungen 20, 21, 22 auf der Rückseite 15 des Basisteils 13 angedeutet, welche aufgrund des durchscheinenden Materials des Basisteils 13 auch von der Vorderseite 14 aus sichtbar sind.

Auf der Rückseite 15 des Basisteils 13 sind Ausprägungen 20, 21, 22, 23 ausgebildet, welche in Einsatzlage der Schutzabdeckung 12 in die Öffnungen 7, 8, 9 und 10 in der Bedienfront 4d eingreifen und diese verschließen. Die Ausprägungen 20 bis 23 und ihr Hinausragen über die Rückseite 15 des Basisteils 13 sind besonders gut aus der Darstellung der Figur 5 ersichtlich. Aufgrund der speziellen, mit den abzudichtenden Öffnungen 7 bis 10 korrespondierenden Ausgestaltung der Ausprägungen 20 bis 23 ist die Schutzabdeckung 12 besonders leicht zu positionieren.

Die Ausprägungen 20 und 21 sind kreisförmig ausgebildet und verschließen in Einsatzlage der Schutzabdeckung 12 die ebenfalls kreisförmigen Öffnungen 7 und 8 in der Bedienfront 4d. Die Ausprägung 22 ist quadratisch ausgebildet und verschließt in Einsatzlage der Schutzabdeckung 12 die ebenfalls quadratische Öffnung 9 in der Bedienfront 4d. Die Ausprägung 23 ist im Wesentlichen oval ausgebildet und verschließt in Einsatzlage der Schutzabdeckung 12 die Öffnung 10 in der Bedienfront 4d, wobei das Betätigungselement 11 durch die einzige durch das Basisteil 13 hindurchgehende Öffnung 19 hindurchgreift. Mit anderen Worten wird durch die Ausprägung 23 und deren Eingreifen in die Öffnung 10 verhindert, dass das Betätigungselement 11 in Einsatzlage der Schutzabdeckung 12 innerhalb der Öffnung 10 verschoben und das Einschub-Bedienelement 5 in einen anderen Betriebszustand überführt wird. Die aufgesetzte Schutzabdeckung 12 bietet auf diese Weise einen Schutz gegenüber Fehlbedienung des Einschub-Bedienelements 5. Da das Basisteil 13 aus einem durchsichtigen Kunststoff gefertigt ist, ist die Anzeige des Betriebszustands in der Öffnung 9 auch bei montierter Schutzabdeckung 12 stets ablesbar.

Auf der Rückseite 15 des Basisteils 13 ist angrenzend an die Kante 16 ein erstes umlaufendes Dichtelement vorgesehen. Dieses Dichtelement ist in der Figur 4 selber nicht dargestellt, wohl aber die Nut 25, innerhalb derer das umlaufende Dichtelement angeordnet ist. Darüber hinaus sind auf der Rückseite 15 des Basisteils 13 umlaufend um jede Ausprägung 20, 21, 22, 23 weitere dritte Dichtelemente vorgesehen, welche ebenfalls selber nicht dargestellt sind, wohl aber die diese dritten Dichtelemente aufnehmenden Nuten 26, 27, 28, 29.

Schließlich ist auch auf der Vorderseite 14 des Basisteils 13 eine Nut 30 umlaufend um die Öffnung 19 angeordnet, die der Aufnahme eines ebenfalls nicht dargestellten zweiten Dichtelements dient.

Die hier nicht dargestellten Dichtelemente sind aus einem zweikomponentigen Polyurethan-Schaum gefertigt und werden durch Beschäumen unmittelbar am Ort des Dichtungssitzes, das heißt in den Nuten 25 bis 30, auf das Basisteil 13 aufgebracht. Hierdurch sind die Dichtelemente fest mit dem Basisteil 13 verbunden.

Die Ausprägungen 20 bis 23 sind somit jeweils von zwei Dichtelementen umgeben, nämlich von einem gemeinsamen, in der Nut 25 umlaufenden ersten Dichtelement sowie individuellen, jede Ausprägung 20 bis 23 umgebenden und in den Nuten 26 bis 29 aufgenommenen dritten Dichtelementen. Die Öffnung 19 ist von einem zweiten Dichtelement umgeben, welches in der Nut 30 aufgenommen wird. Auf diese Weise werden die Öffnungen 7 bis 10 in der Bedienfront 4d bei aufgesetzter und fixierter Schutzabdeckung 12 effizient gegen Wasser und Staub abgedichtet, so dass die Schutzart IP54 erreicht wird.

Die Befestigung der Schutzabdeckung 12 an der Bedienfront 4d erfolgt mit Hilfe einer Rändelmutter 34, gegebenenfalls unter Zwischenlage einer Unterlegscheibe 35. Die Rändelmutter 34 wird auf das mit einem Gewinde ausgestattete und durch die Öffnung 19 des Basisteils 13 hindurchgreifende Betätigungselement 11 geschraubt und fest angezogen. Durch das Anziehen der Rändelmutter 34 wird die Schutzabdeckung 12 gegen die Bedienfront 4d gepresst bzw. zwischen Bedienfront 4d und Rändelmutter 34 eingeklemmt.

Bei derartig aufgesetzter und fixierter Schutzabdeckung 12 wird einerseits in Übereinstimmung mit den Anforderungen an die Schutzart IP54 verhindert, das Wasser und/oder Staub in die Öffnungen 7 bis 10 in der Bedienfront 4d eintreten, andererseits wird ein Schutz gegenüber einer Fehlbedienung des Einschub-Bedienelements 5 gewährleistet, da das Betätigungselement 11 bei aufgesetzter Schutzabdeckung 12 nicht bewegt werden kann.

Um die von der Schutzabdeckung 12 abgedeckten Bereiche wieder zugänglich zu machen kann entweder die Rändelmutter 34 vollständig gelöst und abgenommen werden, so dass auch die Schutzabdeckung 12 vollständig abgenommen werden kann, oder aber die Rändelmutter 34 wird nur soweit gelöst, dass sie noch an dem Betätigungselement 11 verbleibt, das Basisteil 13 aber ein Stück weit von der Bedienfront 4d wegbewegt werden kann, so dass die Ausprägungen 20 bis 23 aus den Öffnungen 7 bis 10 herausbewegt werden können. Die Schutzabdeckung 12 kann dann um die Achse B des Betätigungselements 11 um 180° nach unten schwenken, wie es in der Figur 1 durch gestrichelte Linien angedeutet ist. In diesem Zustand sind die Öffnungen 7 bis 10 wieder zugänglich, auch das Betätigungselement 11 ist innerhalb der Öffnung 10 wieder verschiebbar, wobei gleichzeitig eine Verliersicherheit für die Schutzabdeckung 12 gegeben ist.

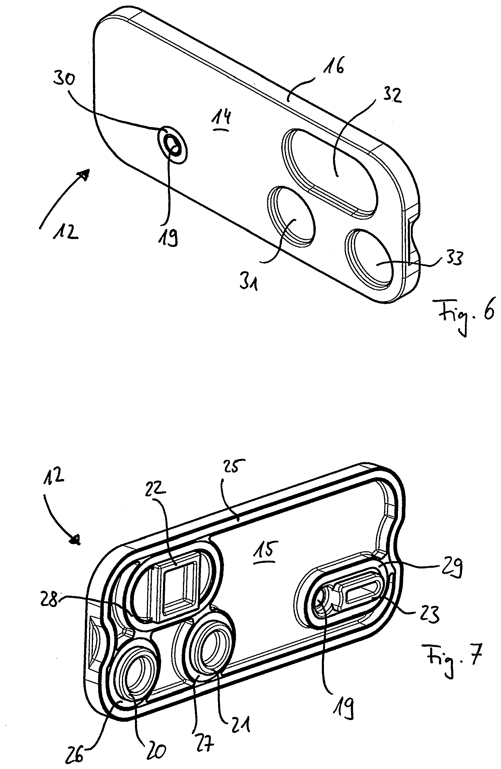

Die Figuren 6 und 7 zeigen eine weitere Ausführungsform der erfindungsgemäßen Schutzabdeckung 12, welche sich von der Schutzabdeckung 12 der Figuren 3 bis 5 lediglich in ihren äußeren Abmessungen sowie in der Anordnung der Ausprägungen 20 bis 23 und der Öffnung 19 unterscheidet. Die Schutzabdeckung 12 der Figuren 6 und 7 eignet sich entsprechend zur Abdichtung eines größeren Einschub-Bedienelements 5 mit korrespondierend angeordneten, abzudichtenden Öffnungen.

Bei alternativen, hier nicht gezeigten Ausführungsbeispielen der Erfindung kann auf der Rückseite 15 des Basisteils 13 auch lediglich ein erstes Dichtelement und entsprechend lediglich eine umlaufende Nut 25 vorgesehen sein, die Nuten 26, 27, 28, 29 sowie die dritten Dichtelemente können dann entfallen.

Insbesondere das zweite Dichtelement kann bei alternativen Ausführungsbeispielen der Erfindung auch als vorgefertigter Dichtring ausgebildet sein und in die Nut 30 auf der Vorderseite 14 des Basisteils 13 eingelegt werden. Bei einer weiteren Ausgestaltung kann auf die Nut 30 und das zweite Dichtelement ganz verzichtet werden und die zur Fixierung der Schutzabdeckung 12 eingesetzte Mutter kann an ihrer dem Basisteil 13 zugewandten Seite mit einem Dichtelement ausgestattet sein, so dass die Abdichtung der Öffnung 19 auf diese Weise gewährleistet ist.

## Patentansprüche

1. Schutzabdeckung (12) für ein Einschub-Bedienelement (5) in einer Schaltanlage, umfassend ein Basisteil (13) mit einer Vorderseite (14), einer Rückseite (15) und einer umlaufenden Kante (16), wobei auf der Rückseite (15) des Basisteils (13) Ausprägungen (20, 21, 22, 23) ausgebildet sind, welche geeignet sind, in korrespondierende Öffnungen (7, 8, 9, 10) in einer Bedienfront (4d) des Einschub-Bedienelements (5) einzugreifen und diese zu verschließen, wobei darüber hinaus auf der Rückseite (15) des Basisteils (13) angrenzend an die Kante (16) ein erstes umlaufendes Dichtelement vorgesehen ist, wobei weiterhin eine von der Rückseite (15) zur Vorderseite (14) durch das Basisteil (13) hindurchgehende Öffnung (19) für den Durchgriff eines Betätigungselements (11) des Einschub-Bedienelements (5) vorgesehen ist, wobei die Öffnung (19) so bemessen ist, dass eine Betätigung des Betätigungselements (11) bei aufgesetzter Schutzabdeckung (12) nicht möglich ist.

2. Schutzabdeckung (12) nach Anspruch 1, wobei die Öffnung (19) auf der Vorderseite (14) des Basisteils (13) von einem zweiten Dichtelement umgeben ist.

3. Schutzabdeckung (12) nach Anspruch 1 oder 2, wobei mindestens ein drittes Dichtelement vorgesehen ist, welches umlaufend um mindestens eine Ausprägung (20, 21, 22, 23) auf der Rückseite (15) des Basisteils (13) angeordnet ist.

4. Schutzabdeckung (12) nach einem der Ansprüche 1 bis 3, wobei Nuten (25, 26, 27, 28, 29, 30) für die Aufnahme der Dichtelemente vorgesehen sind.

5. Schutzabdeckung (12) nach einem der Ansprüche 1 bis 4, wobei die Dichtelemente aus einem Polyurethan-Schaum gefertigt sind.

6. Schutzabdeckung (12) nach einem der Ansprüche 1 bis 5, wobei die Dichtelemente durch Beschäumen unmittelbar auf das Basisteil (13) aufgebracht werden und fest mit diesem verbunden sind.

7. Schutzabdeckung (12) nach einem der Ansprüche 1 bis 6, wobei das Basisteil (13) in einem Spritzgussverfahren aus einem Kunststoff gefertigt ist.

8. Schutzabdeckung (12) nach einem der Ansprüche 1 bis 7, wobei das Basisteil (13) zumindest bereichsweise aus einem durchscheinenden Material gefertigt ist.

9. Schutzabdeckung (12) nach einem der Ansprüche 1 bis 8, wobei an dem Basisteil (13) mindestens eine Griffmulde (17, 18) ausgebildet ist.

10. Schaltanlage, umfassend ein Einschub-Bedienelement (5) mit einer Schutzabdeckung (12) nach einem der Ansprüche 1 bis 9, wobei in Einsatzlage der Schutzabdeckung (12) ein Betätigungselement (11) des Einschub-Bedienelements (5) durch die durch das Basisteil (13) der Schutzabdeckung (12) hindurchgehende Öffnung (19) hindurchgreift und die Schutzabdeckung (12) mittels eines auf dem Betätigungselement (11) fixierbaren Befestigungsmittels (34) abdichtend festklemmbar ist.

## Claims

1. Protective covering (12) for a slide-in operating element (5) in a switching system, comprising a base part (13) having a front side (14), a rear side (15), and a circumferential edge (16), wherein configurations (20, 21, 22, 23) are formed on the rear side (15) of the base part (13), which are suitable to engage in corresponding openings (7, 8, 9, 10) in an operating front (4d) of the slide-in operating element (5) and to close the same, wherein furthermore a first circumferential sealing element is provided on the rear side (15) of the base part (13) adjacent to the edge (16), wherein in addition an opening (19) extending from the rear side (15) to the front side (14) through the base part (13) for the through-passage of an actuating element (11) of the slide-in operating element (5) is provided, wherein the opening (19) is dimensioned such that an actuation of the actuating element (11) is not possible when the protective covering (12) is mounted.

2. Protective covering (12) according to claim 1, wherein the opening (19) on the front side (14) of the base part (13) is surrounded by a second sealing element.

3. Protective covering (12) according to claim 1 or 2, wherein at least one third sealing element is provided, which is arranged circumferentially around at least one configuration (20, 21, 22, 23) on the rear side (15) of the base part (13).

4. Protective covering (12) according to any one of claims 1 to 3, wherein grooves (25, 26, 27, 28, 29, 30) are provided for receiving the sealing elements.

5. Protective covering (12) according to any one of claims 1 to 4, wherein the sealing elements are produced from a polyurethane foam.

6. Protective covering (12) according to any one of claims 1 to 5, wherein the sealing elements are applied directly to the base part (13) by foaming and are firmly connected thereto.

7. Protective covering (12) according to any one of claims 1 to 6, wherein the base part (13) is produced from a plastic in an injection moulding process.

8. Protective covering (12) according to any one of claims 1 to 7, wherein the base part (13) is produced at least in regions from a translucent material.

9. Protective covering (12) according to any one of claims 1 to 8, wherein at least one recessed grip (17, 18) is formed on the base part (13).

10. Switching system, comprising a slide-in operating element (5) having a protective covering (12) according to any one of claims 1 to 9, wherein in the inserted position of the protective covering (12) an actuating element (11) of the slide-in operating element (5) engages through the opening (19) extending through the base part (13) of the protective covering (12) and the protective covering (12) can be firmly clamped in a sealing manner by means of a fastening means (34), which can be fixed on the actuating element (11).

## Revendications

1. Couvercle de protection (12) pour un élément de commande enfichable (5) dans un appareillage de commutation, comprenant une partie de base (13) avec une face avant (14), une face arrière (15) et un bord périphérique (16), selon lequel sur la face arrière (15) de la partie de base (13), des formes (20, 21, 22, 23) sont formées, lesquelles sont appropriées pour s'introduire dans des ouvertures correspondantes (7, 8, 9, 10) dans un panneau frontal de commande (4d) de l'élément de commande enfichable (5) et fermer celles-ci, selon lequel, en outre, sur la face arrière (15) de la partie de base (13) adjacente au bord (16), un premier élément d'étanchéité périphérique est prévu, selon lequel, en outre, une ouverture (19) traversant depuis la face arrière (15) jusqu'à la face avant (14) à travers la partie de base (13) est prévue pour la traversée d'un élément d'actionnement (11) de l'élément de commande enfichable (5), selon lequel l'ouverture (19) est dimensionnée de façon qu'un actionnement de l'élément d'actionnement (11) ne soit pas possible lorsque le couvercle de protection (12) est posé.

2. Couvercle de protection (12) selon la revendication 1, selon lequel l'ouverture (19) sur la face avant (14) de la partie de base (13) est entourée d'un deuxième élément d'étanchéité.

3. Couvercle de protection (12) selon la revendication 1 ou 2, selon lequel au moins un troisième élément d'étanchéité est prévu, lequel est disposé de manière périphérique autour d'au moins une forme (20, 21, 22, 23) sur la face arrière (15) de la partie de base (13).

4. Couvercle de protection (12) selon l'une des revendications 1 à 3, selon lequel des rainures (25, 26, 27, 28, 29, 30) sont prévues pour le logement des éléments d'étanchéité.

5. Couvercle de protection (12) selon l'une des revendications 1 à 4, selon lequel les éléments d'étanchéité sont fabriqués dans une mousse polyuréthane.

6. Couvercle de protection (12) selon l'une des revendications 1 à 5, selon lequel les éléments d'étanchéité sont immédiatement appliqués par moussage sur la partie de base (13) et sont fermement liés à celle-ci.

7. Couvercle de protection (12) selon l'une des revendications 1 à 6, selon lequel la partie de base (13) est fabriquée en matière synthétique avec un procédé de moulage par injection.

8. Couvercle de protection (12) selon l'une des revendications 1 à 7, selon lequel la partie de base (13) est fabriquée au moins par zones dans un matériau translucide.

9. Couvercle de protection (12) selon l'une des revendications 1 à 8, selon lequel au moins un creux de préhension (17, 18) est formé sur la partie de base (13).

10. Appareillage de commutation, comprenant un élément de commande enfichable (5) avec un couvercle de protection (12) selon l'une des revendications 1 à 9, selon lequel, lorsque le couvercle de protection (12) est mis en œuvre, un élément d'actionnement (11) de l'élément de commande enfichable (5) traverse l'ouverture (19) traversant la partie de base (13) du couvercle de protection (12) et le couvercle de protection (12) peut être serré fixement de manière étanche à l'aide d'un moyen de fixation qui peut être fixé sur l'élément d'actionnement (11).
